# EUROPÄISCHE PATENTANMELDUNG

(11) **EP 3 822 724 A1**
(43) Veröffentlichungstag der Anmeldung: **19.05.2021**
(21) Anmeldenummer: 19209040.5
(22) Anmeldetag: 14.11.2019
(51) Int. Cl.: G05B 23/02, G05B 19/418

(54) **LEITSYSTEM FÜR EINE TECHNISCHE ANLAGE DAZU AUSGEBILDET, EIN VISUELL CODIERTES TRENDDIAGRAMM ZU ERZEUGEN**

(71) Anmelder: Siemens Aktiengesellschaft, 80333 München (DE)
(72) Erfinder: Lutz, Benjamin, 76327 Pfinztal (DE)

(57) **Zusammenfassung**

Vorgeschlagen wird ein Leitsystem (6) einer technischen Anlage, welches wenigstens einen Operator Station Server (7) und einen Operator Station Client (8) aufweist,
welcher Operator Station Server (7) einen Visualisierungsdienst (17) zur Ausgabe von Bildinformationen an den Operator Station Client (8) aufweist,
wobei der Operator Station Server (7) dazu ausgebildet ist, aus einem ersten, zu einem ersten technischen Objekt (13) der technischen Anlage gehörigen Messwert, und einem zweiten, zu einem zweiten technischen Objekt (14) der technischen Anlage gehörigen Messwert ein XY-Trenddiagramm (1) mit wenigstens einem in dem XY-Trenddiagramm (1) visualisierten Arbeitspunkt (A1, A2, A3, A4, A5) zu erzeugen,
und wobei der Operator Station Server (7) dazu ausgebildet ist, das XY-Trenddiagramm (1) mit dem wenigstens einen Arbeitspunkt (A1, A2, A3, A4, A5) mittels des Visualisierungsdienstes (17) an den Operator Station Client (8) zu übertragen. Das Leitsystem (6) ist dadurch gekennzeichnet, dass das Leitsystem (6) dazu ausgebildet ist, den wenigstens einen Arbeitspunkt (A1, A2, A3, A4, A5) mit einer visuellen Codierung zu versehen, die auf Basis eines Alarmstatus und/oder eines Qualitätsstatus des zu dem wenigstens einen Arbeitspunkt gehörigen ersten Messwerts und des zweiten Messwerts erzeugt wird.

## Beschreibung

Die Erfindung betrifft ein Leitsystem einer technischen Anlage, welches wenigstens einen Operator Station Server und einen Operator Station Client aufweist, mit den Merkmalen des Anspruchs 1.

Ein Ziel bei der Automatisierung verfahrenstechnischer Anlagen ist es, diese in ihren optimalen Arbeitspunkten zu betreiben. Zur Überprüfung der jeweiligen Arbeitspunkte haben sich so genannte XY-Trends bzw. XY-Trenddiagramme etabliert. Bei diesen XY-Trend-diagrammen werden zwei (verfahrenstechnische) Prozessmesswerte als 2-Tupel mit gleicher Zeitbasis zusammen mit einer Vorlagenkennlinie visualisiert. Bei den zwei Prozessmesswerten kann es sich beispielsweise um den Druck und die Temperatur einer Turbine handeln. Darüber hinaus kann auch der historische Verlauf der 2-Tupel dargestellt werden, um einen Trend des 2-Tupel Arbeitspunktes verfolgen zu können.

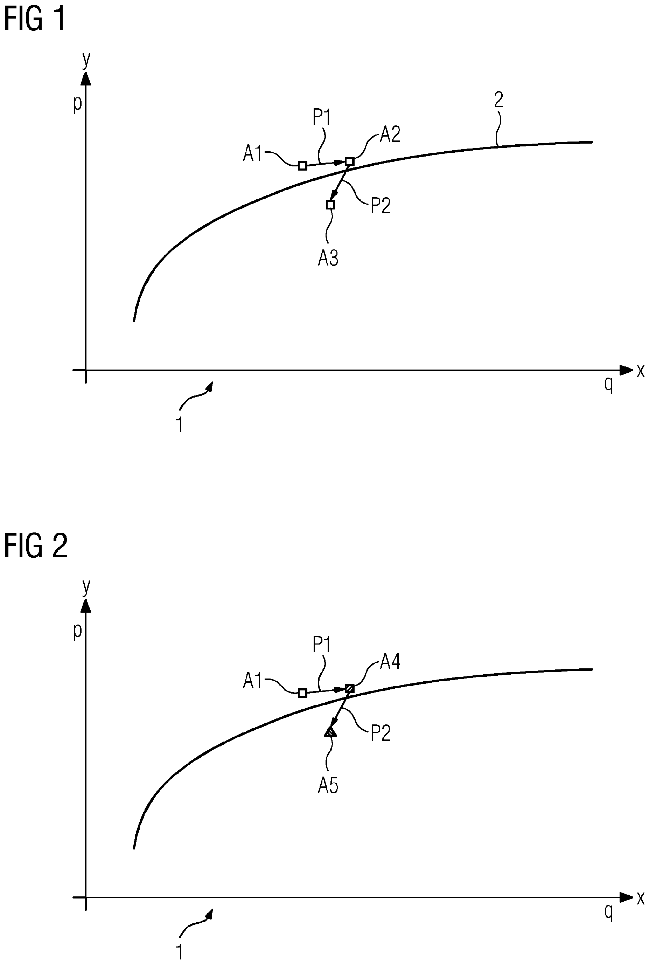

In FIG 1 ist ein beispielhaftes XY-Trenddiagramm 1 mit einem Druck p entlang einer Y-Achse und mit einem Durchfluss q entlang einer X-Achse zur Überprüfung eines optimalen Arbeitspunktes A1, A2, A3 des 2-Tupels Druck/Durchfluss eines Mixers mit einer Vorlagenkennlinie 2 nach dem Stand der Technik dargestellt. Die Pfeile P1, P2 weisen auf einen historischen Verlauf der Arbeitspunkte A1, A2, A3 hin. Wie in FIG 1 erkennbar, ist das XY-Trenddiagramm 1 aus verfahrenstechnischer Sicht kontextfrei, d.h. es werden lediglich die Werte der Prozesswerte (p und q) mit gleicher Zeitbasis dargestellt - wichtige Informationen zur Validität und Kontext fehlen. Diese wären jedoch für eine effiziente Optimierung des Arbeitspunktes A1, A2, A3 durch einen Operator der dazugehörigen technischen Anlage sehr hilfreich.

Der Erfindung liegt die Aufgabe zugrunde, ein Leitsystem für eine technische Anlage anzugeben, welches eine Optimierung eines Arbeitspunktes der technischen Anlage durch einen Operator der technischen Anlage vereinfacht und effizienter gestaltet.

Die zuvor formulierte Aufgabe wird durch ein Leitsystem einer technischen Anlage mit den Merkmalen des Anspruchs 1 gelöst. Das Leitsystem weist wenigstens einen Operator Station Server und einen Operator Station Client auf, wobei der Operator Station Server einen Visualisierungsdienst zur Ausgabe von Bildinformationen an den Operator Station Client aufweist. Der Operator Station Server ist dazu ausgebildet, aus einem ersten, zu einem ersten technischen Objekt der technischen Anlage gehörigen Messwert und einem zweiten, zu einem zweiten technischen Objekt der technischen Anlage gehörigen Messwert ein XY-Trenddiagramm mit wenigstens einem in dem XY-Trenddiagramm visualisierten Arbeitspunkt zu erzeugen. Zudem ist der Operator Station Server dazu ausgebildet, das XY-Trenddiagramm mit dem Arbeitspunkt mittels des Visualisierungsdienstes an den Operator Station Client zu übertragen.

Das erfindungsgemäße Leitsystem ist dadurch gekennzeichnet, dass es dazu ausgebildet ist, den wenigstens einen Arbeitspunkt mit einer visuellen Codierung zu versehen, die auf Basis eines Alarmstatus und/oder eines Qualitätsstatus des zu dem wenigstens einen Arbeitspunkt gehörigen ersten Messwerts und des zweiten Messwerts erzeugt wird.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann neben dem im vorliegenden Fall vorgesehenen Operator Station Server und dem Operator Station Client Sensoren zur Ermittlung von Messwerten sowie verschiedene Aktoren umfassen. Zudem kann das Leitsystem sogenannte prozessnahe Komponenten, die zur Ansteuerung der Aktoren bzw. Sensoren dienen, aufweisen. Darüber hinaus kann das Leitsystem u.a. Mittel zu einem Engineering aufweisen. Unter dem Begriff Leitsystem sind zusätzlich auch weitere Recheneinheiten für komplexere Regelungen und Systeme zur Datenspeicherung und - verarbeitung zu fassen.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern (sogenannten Operatoren) zur Verfügung stellt. Der Operator Station Server stellt in der Regel eine Kommunikationsverbindung zu Automatisierungssystemen der technischen Anlage her und gibt Daten der technischen Anlage an den sogenannten Operator Station Client weiter, die zur Bedienung und Beobachtung eines Betriebs der einzelnen Funktionselemente der technischen Anlage dienen.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server

(Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Operator wird ein menschlicher Bediener der technischen Anlage verstanden. Der Operator interagiert mittels spezieller Benutzerschnittstellen mit der technischen Anlage bzw. dessen Leitsystem und steuert spezielle technische Funktionen der technischen Anlage. Hierzu kann der Operator ein Bedien- und Beobachtungssystem (den Operator Station Client in Verbindung mit dem Operator Station Server) des Leitsystems nutzen.

Unter einem technischen Objekt wird eine abgeschlossene technische Einheit verstanden, die in eine übergeordnete Steuerungsebene integrierbar ist. Ein solches technisches Objekt kann zum Beispiel ein Zusammenschluss mehrerer Messstellen oder ein größerer Anlagenteil einer industriellen Anlage sein. Das technische Objekt muss aber nicht dem Feld der Industrieanlagen entstammen, sondern kann beispielsweise auch ein Motormodul eines Automobils, eines Schiffs oder dergleichen sein.

Erfindungsgemäß ist das Leitsystem dazu ausgebildet, den wenigstens einen Arbeitspunkt mit einer visuellen Codierung zu versehen, die auf Basis eines Alarmstatus und/oder eines Qualitätsstatus des zu dem wenigstens einen Arbeitspunkt gehörigen ersten Messwerts und des zweiten Messwerts erzeugt wird. Durch die unmittelbare Darstellung eines Alarmstatus und/oder eines Qualitätsstatus erhält ein Operator eine direkte Aussage bezüglich einer Wertigkeit einer Optimierung eines Arbeitspunktes im Kontext eines Bedienens der technischen Anlage. Die Effizienz des Optimierens des Arbeitspunktes kann durch das erfindungsgemäße Leitsystem deutlich gesteigert werden.

Die visuelle Codierung kann eine Farbcodierung und/oder eine Formcodierung umfassen, um den Alarmstatus und/oder den Qualitätsstatus besonders effizient darzustellen. Beispielsweise kann eine weiße Farbe eines in dem Trenddiagramm dargestellten Arbeitspunktes einen Alarmstatus "Kein Alarm, eine gelbe Farbe einen Alarmstatus "Mittelschwerer Alarm" und eine rote Farbe einen Alarmstatus "Schwerer Alarm" signalisieren. Für einen Qualitätsstatus "gut" kann der Arbeitspunkt beispielsweise eine Quadratform, für einen Qualitätsstatus "mittel" eine "Dreiecksform" und für einen Qualitätsstatus "schlecht" eine Rautenform aufweisen. Dadurch kann der Operator deutlich einfacher und schneller die Codierung und die zugrundliegenden Status erfassen und entsprechend reagieren.

Im Rahmen einer bevorzugten Weiterbildung der Erfindung ist das XY-Trenddiagramm in ein zeitkontinuierliches Diagramm umschaltbar ist, wobei das Leitsystem dazu ausgebildet ist, in dem zeitkontinuierlichen Diagramm den ersten Messwert, den zweiten Messwert und wenigstens einen, zu den beiden Messwerten gehörigen Arbeitspunkt zeitkontinuierlich darzustellen, und wobei das Leitsystem dazu ausgebildet ist, den wenigstens einen Arbeitspunkt in dem zeitkontinuierlichen Diagramm mit einer visuellen Codierung zu versehen, die auf Basis eines Alarmstatus und/oder eines Qualitätsstatus des zu dem wenigstens einen Arbeitspunkt gehörigen ersten Messwerts und des zweiten Messwerts erzeugt wird.

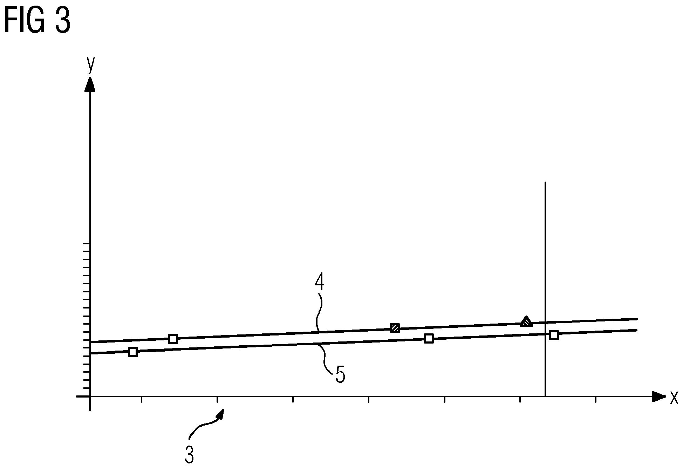

Durch die Möglichkeit, von dem XY-Trenddiagram in ein zeitkontinuierliches Diagramm umzuschalten, kann eine Ursache für einen bestimmten Alarmstatus und/oder Qualitätsstatus schneller ermittelt werden. Es sei hierzu auf die Beschreibung der Ausführungsbeispiele (insbesondere FIG 3) verwiesen, wo der Vorteil dieser Merkmalsausprägung klar ersichtlich wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird.

Es zeigen:
- FIG 1: ein XY-Trenddiagramm gemäß dem Stand der Technik;
- FIG 2: ein XY-Trenddiagramm eines erfindungsgemäßen Leitsystems;
- FIG 3: ein zeitkontinuierliches Diagramm eines erfindungsgemäßen Leitsystems; und
- FIG 4: eine schematische Zeichnung eines Teils eines erfindungsgemäßen Leitsystems.

FIG 2 zeigt im Wesentlichen dasselbe XY-Trenddiagramm 1 wie FIG 1. Im Gegensatz zu dem an sich bekannten XY-Trenddiagramm 1 gemäß FIG 1 sind in dem XY-Trenddiagramm 1 zwei Arbeitspunkte A4, A5 dargestellt, die jeweils eine visuelle Codierung aufweisen, die auf Basis eines Alarmstatus und/oder eines Qualitätsstatus eines zu dem wenigstens einen Arbeitspunkt gehörigen ersten Messwerts und eines zweiten Messwerts erzeugt wird. Der Arbeitspunkt A4 weist in FIG 2 eine bestimmte Farbe auf (hier durch eine Schraffierung symbolisiert), die von der Farbe des alarmlosen Arbeitspunkts A1 abweicht und auf das Vorhandensein eines Alarms von dem Arbeitspunkts A4 zugrunde liegenden (Prozess-)Messwerten hinweist. Der zweite Arbeitspunkt A5 weist zusätzlich zu der von dem Arbeitspunkt A1 abweichenden Farbe (ebenfalls durch eine Schraffur symbolisiert) eine von den anderen beiden Arbeitspunkten A1, A4 abweichende Form auf (der Arbeitspunkt A5 weist im Gegensatz zu den Rechtecksformen der Arbeitspunkte A1, A4 eine dreieckige Form auf). Diese Abweichung deutet darauf hin, dass eine bestimmte Qualität der dem Arbeitspunkt zugrunde liegenden (Prozess-)Messwerte vorliegt.

Da in dem XY-Trenddiagramm 1 ein Arbeitspunkt A1, A2, A3, A4, A5 jeweils einem Messwertpaar zugeordnet ist, handelt es sich bei dem in dem Arbeitspunkt A1, A2, A3, A4, A5 um aggregierte Werte. Die Information über die tatsächliche Quelle des Qualitätsstatus oder des Alarmstatus (Messwert p oder Messwert q) ist der Ansicht des XY-Trenddiagramms 1 (vgl. FIG 2) nicht zu entnehmen. Das Leitsystem kann daher über eine dynamische Umschaltfunktion zwischen dem XY-Trenddiagramm 1 und einem zeitkontinuierlichen Diagramm 3 verfügen, wobei letzteres in FIG 3 dargestellt ist.

Die in FIG 3 in der Zeichenebene oben verlaufende Kurve 4 entspricht einer zeitkontinuierlichen Darstellung des (Prozess-)Messwertes p aus FIG 2. Die in FIG 3 in der Zeichenebene unten verlaufende Kurve 5 entspricht einer zeitkontinuierlichen Darstellung des (Prozess-)Messwertes q aus FIG 2.
Wie aus FIG 3 ersichtlich wird, ist für den schlechten Qualitätscode (durch dreieckige Form symbolisiert) des neusten Arbeitspunktes A5 aus FIG 2 der (Prozess-)Messwert p verantwortlich. Zudem ist unmittelbar zu erkennen, dass auch die Ursache für den geänderten Alarmstatus (durch Schraffur gekennzeichnete, abweichende Farbe) in dem (Prozess-)Messwert p zu suchen ist.

In der zeitkontinuierlichen Darstellung (FIG 3) ist es möglich, einen definierten historischen Bereich auszuwählen, für den die historischen Arbeitspunkte A1, A2, A3, A4, A5 überprüft werden sollen.

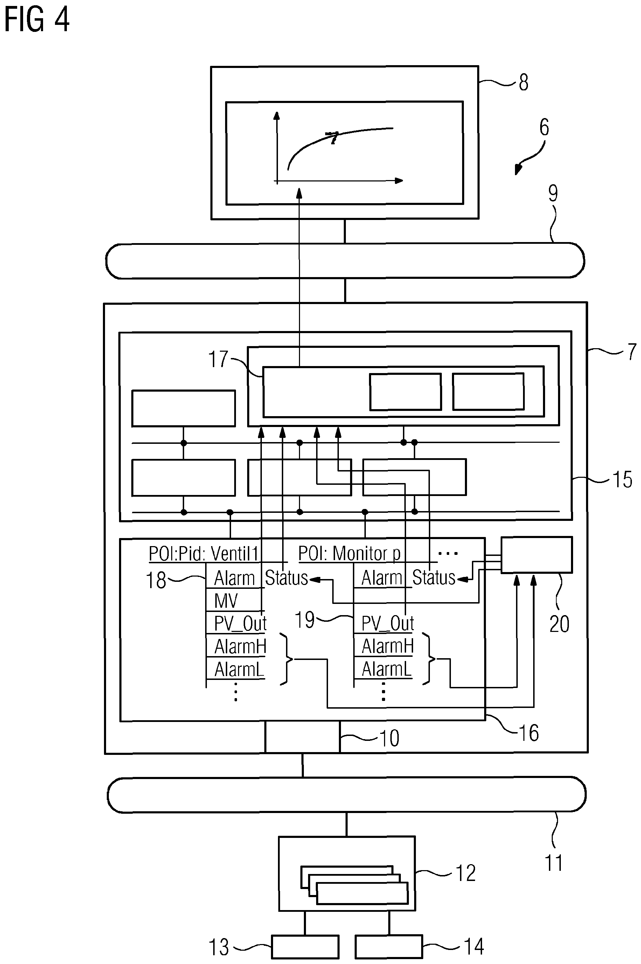

In FIG 4 ist ein Teil eines erfindungsgemäßen Leitsystems 6 einer Prozessanlage dargestellt. Das Leitsystem 6 umfasst einen Server eines Bediensystems bzw. einen Operator Station Server 7 und einen dazugehörigen Operator Station Client 8. Der Operator Station Server 7 und der Operator Station Client 8 sind über einen Terminalbus 9 miteinander und mit nicht dargestellten weiteren Komponenten des Leitsystems 7 wie einem Engineering System Server oder einem Prozessdatenarchiv verbunden.

Ein Benutzer bzw. Operator hat mittels des Operator Station Clients 8 mittels des Terminalbus 9 im Kontext eines Bedienens und Beobachtens Zugriff auf den Operator Station Server 7. Der Terminalbus 9 kann, ohne sich darauf zu beschränken, beispielsweise als Industrial Ethernet ausgebildet sein.

Der Operator Station Server 7 weist eine Geräteschnittstelle 10 auf, die mit einem Anlagenbus 11 verbunden ist. Hierüber kann der Operator System Server 7 mit einem Automatisierungsgerät 12 des Leitsystems 6 kommunizieren. Der Anlagenbus 11 kann, ohne sich darauf zu beschränken, beispielsweise als Industrial Ethernet ausgebildet sein. Das Automatisierungsgerät 12 ist wiederum mit wenigstens einem ersten technischen Objekt 13 und einem zweiten technischen Objekt 14 verbunden. Das Automatisierungsgerät 12 kann zudem mit einer beliebigen Anzahl an weiteren Subsystemen (nicht dargestellt) verbunden sein.

In dem Operator Station Server 7 ist ein Visualisierungsdienst 15 integriert, über den eine Übertragung von (Visualisierungs-)Daten an den Operator Station Client 8 erfolgen kann. Zudem weist der Operator Station Server 7 ein Prozessabbild (Process Image) 16 der Prozessanlage auf.

Ein Trenddienst 17, der Teil des Visualisierungsdienstes 15 ist, berechnet eine Aggregation eines Qualitätsstatus und eines Alarmstatus für die einzelnen, in dem XY-Trenddiagramm 1 dargestellten Arbeitspunkte A1, A2, A3, A4, A5 (vgl. FIG 2 und FIG 3). Dabei greift der Trenddienst 17 auf in dem Prozessabbild 16 hinterlegte Prozessobjekte 18, 19 zu. Diese sind wiederum dem ersten technischen Objekt 13 bzw. dem zweiten technischen Objekt 14 zugeordnet und beinhalten unter anderem die von den beiden technischen Objekten 13, 14 stammenden (Prozess-)Messwerte. Einen Alarmstatus, den jedes der beiden Prozessobjekte 18, 19 (bzw. die dazugehörigen Prozessmesswerte) zu einem aktuellen Zeitpunkt aufweisen, berechnet ein separater Alarmdienst 20 und hinterlegt diese Information zur weiteren Verwendung durch den Trenddienst 17 in dem Prozessabbild 16. Die Qualitätsstatus für die Aggregation in den Arbeitspunkten A1, A2, A3, A4, A5 können direkt aus Begleitwerten der jeweiligen Prozessmesswerte entnommen werden.

Die Qualität eines Messwertes kann dabei auf unterschiedlichen Ebenen beeinflusst werden:
- Im Feld, wenn beispielsweise ein Drahtbruch erkannt wird
- In dem Automatisierungsgerät 13, wenn die Verbindung zum Feld unterbrochen ist
- In dem Operator Station Server 7, wenn die Verbindung zu dem Automatisierungsgerät 13 unterbrochen ist.

Die Qualitätsstufen eines Messwertes sind in der Regel genormt und werden durch die unterschiedlichen Komponenten des Leitsystems 6 vergeben. Der Operator kann den Qualitätsstatus nicht beeinflussen, er bekommt ihn lediglich angezeigt. Der Qualitätsstatus kann beispielsweise in den Stufen "good" (alles ok), "uncertain" ("längere" Zeit keine Werteupdate bekommen) und "bad" (lange Zeit kein update bekommen / Drahtbruch festgestellt / Verbindungsausfall festgestellt) ausgedrückt werden.

Der Trenddienst 17 stellt weiterhin die zuvor beschriebene Umschaltfunktionalität zwischen dem XY-Trenddiagramm 1 und dem zeitkontinuierlichen Diagramm 3 zur Verfügung.

Obwohl die Erfindung im Detail durch das bevorzugte Ausführungsbeispiel und die Figuren näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (6) einer technischen Anlage, welches wenigstens einen Operator Station Server (7) und einen Operator Station Client (8) aufweist,
welcher Operator Station Server (7) einen Visualisierungsdienst (17) zur Ausgabe von Bildinformationen an den Operator Station Client (8) aufweist,
wobei der Operator Station Server (7) dazu ausgebildet ist, aus einem ersten, zu einem ersten technischen Objekt (13) der technischen Anlage gehörigen Messwert, und einem zweiten, zu einem zweiten technischen Objekt (14) der technischen Anlage gehörigen Messwert ein XY-Trenddiagramm (1) mit wenigstens einem in dem XY-Trenddiagramm (1) visualisierten Arbeitspunkt (A1, A2, A3, A4, A5) zu erzeugen,
und wobei der Operator Station Server (7) dazu ausgebildet ist, das XY-Trenddiagramm (1) mit dem wenigstens einen Arbeitspunkt (A1, A2, A3, A4, A5) mittels des Visualisierungsdienstes (17) an den Operator Station Client (8) zu übertragen,
**dadurch gekennzeichnet, dass**
das Leitsystem (6) dazu ausgebildet ist, den wenigstens einen Arbeitspunkt (A1, A2, A3, A4, A5) mit einer visuellen Codierung zu versehen, die auf Basis eines Alarmstatus und/oder eines Qualitätsstatus des zu dem wenigstens einen Arbeitspunkt gehörigen ersten Messwerts und des zweiten Messwerts erzeugt wird.

2. Leitsystem (6) nach Anspruch 1, bei dem die visuelle Codierung eine Farbcodierung und/oder eine Formcodierung umfasst.

3. Leitsystem (6) nach einem der vorangegangenen Ansprüche, bei dem das XY-Trenddiagramm (1) in ein zeitkontinuierliches Diagramm (3) umschaltbar ist,
wobei das Leitsystem (6) dazu ausgebildet ist, in dem zeitkontinuierlichen Diagramm (3) den ersten Messwert, den zweiten Messwert und wenigstens einen, zu den beiden Messwerten gehörigen Arbeitspunkt (A1, A2, A3, A4, A5) zeitkontinuierlich darzustellen, und wobei das Leitsystem (6) dazu ausgebildet ist, den wenigstens einen Arbeitspunkt (A1, A2, A3, A4, A5) in dem zeitkontinuierlichen Diagramm (3) mit einer visuellen Codierung zu versehen, die auf Basis eines Alarmstatus und/oder eines Qualitätsstatus des zu dem wenigstens einen Arbeitspunkt (A1, A2, A3, A4, A5) gehörigen ersten Messwerts und des zweiten Messwerts erzeugt wird.
